**Europäisches Patentamt**

(19) **European Patent Office**

**Office européen des brevets**

(11) Numéro de publication: **0 034 534**
**B1**

## (12) FASCICULE DE BREVET EUROPEEN

(45) Date de publication du fascicule du brevet:
**11.01.84**

(21) Numéro de dépôt: **81400217.6**

(22) Date de dépôt: **11.02.81**

(51) Int. Cl.³: **F 02 M 43/00,** G 05 D 11/12,
F 02 B 69/02.

(54) Dispositif d'alimentation en combustible et de régulation de la viscosité de ce combustible.

(30) Priorité: **19.02.80 FR 8004386**

(43) Date de publication de la demande:
**26.08.81 Bulletin 81/34**

(45) Mention de la délivrance du brevet:
**11.01.84 Bulletin 84/2**

(84) Etats contractants désignés:
**DE FR GB NL**

(56) Documents cités:
**FR - A - 1 217 194**
**FR - A - 2 228 249**
**GB - A - 1 388 118**
**US - A - 2 208 444**
**US - A - 2 930 432**
**US - A - 3 415 264**
**US - A - 3 977 427**

(73) Titulaire: **Tacquet, Maurice-André, 14, Allée des Prés,
F-59650 Villeneuve D'Ascq (FR)**

(72) Inventeur: **Tacquet, Maurice-André, 14, Allée des Prés,
F-59650 Villeneuve D'Ascq (FR)**

(74) Mandataire: **Ecrepont, Robert Pierre, 12 Place Simon
Vollant, F-59800 Lille (FR)**

BUNDESDRUCKEREI BERLIN

## Dispositif d'alimentation en combustible et de régulation de la viscosite de ce combustible

L'invention se rapporte à un dispositif d'alimentation en combustible et de régulation de la viscosité de ce combustible plus particulièrement mais non exclusivement destiné aux moteurs thermiques.

Les moteurs thermiques sont fréquemment conçus et alimentés de manière à fonctionner, lors de la mise en service et à faible charge, en combustible léger puis en régime normal, en combustible lourd.

Habituellement, pour leur alimentation en combustible léger, une simple canalisation relie directement la citerne correspondante au dispositif d'injection du moteur.

Par contre, pour le combustible lourd, avant que depuis sa citerne, il parvienne au dispositif d'injection du moteur, il est nécessaire d'en corriger la viscocité. En effet, le combustible lourd peut atteindre une viscocité très élevée et, sie ce combustible était amené sans correction au dispositif d'injection du moteur, les pressions qu'il faudrait appliquer pour son injection détruiraient le dit dispositif.

Un procédé connu à ce jour corriger cette viscosité du combustible lourd consiste en son chauffage plus ou moins intense sous le contrôle d'un viscosimétrique.

Malheureusement, du fait de son hétérogénéité, le combustible lourd arrivant au moyen de réchauffage a une viscosité qui, très fréquemment et soudainement, varie dans les proportions importantes. Aussi, la correction imposée par le moyen viscosimétrique risque souvent d'être sans rapport avec celle devenue nécessaire. Il en résulte des conditionnements de fonctionnement très aléatoires.

Par ailleurs, du fait de ce réglage de la viscosité exclusivement par celui de la température, le combustible parvient au moteur à des températures très variables. De plus, lors du passage de l'alimentation en combustible léger à l'alimentation en combustible lourd ainsi que lors du retour à l'alimentation en combustible léger, le moteur doit fonctionner dans une phase de transition au cours de laquelle il n'est généralement pas possible de contrôler la température et la viscosité du mélange. Il a été constaté que ces périodes transitoires donnent lieu à des avaries: la variation rapide de température du combustible appelée »choc thermique« entraîne le blocage des pompes d'injection et l'élévation anormale de la viscosité pendant de courtes périodes détériore le matériel d'injection et les arbres à cames.

Un autre procédé connu à ce jour, pour corriger la viscosité du combustible, consiste en plus du réchauffage, à mélanger les deux fuels dans des proportions pouvant être modifées selon les informations qu'un moyen viscosimétrique transmet à un ensemble électrique ou électronique déterminant la nouvelle proportion et/ou l'obtenant en régulant le débit dans au moins l'une des deux canalisations puisant l'une le fuel lourd, l'autre le fuel léger (US-A-3 415 264).

Pour permettre cette régulation du débit, dans les réalisations connues, chaque canalisation doit passer par une pompe distincte dont au moins l'une d'elles est, soit à débit variable, soit mue en rotation par un moteur à vitesse variable.

Outre que ces pompes sont très onéreuses et font obstacle à un écoulement du fuel par simple gravité en cas d'arrêt de leur moteur, lors de l'action sur les deux pompes à la fois, la nouvelle proportion est difficile à déterminer et lors de l'action sur une seule pompe, les possibilités de modification sont limitées.

Un résultat que l'invention vise à obtenir est un dispositif d'alimentation en combustible et de régulation de la viscosité de combustible qui soit simple, peu onéreux et qui soit néanmoins très efficace, afin d'assurer une viscosité parfaitement contrôlée et en rapport avec les besoins réels du moteur.

A cet effet, l'invention a pour objet un dispositif du type cité plus haut, caractérisé:

— en ce que le moyen consommant du combustible est alimenté en excés par un réservoir commun lui-même alimenté en combustibles léger et lourd prélevés chacun dans leur propre citerne par une des canalisations dans chacune desquelles le débit n'est contrôlé que par l'une des vannes qui ensemble dene fournissent au réservoir que l'équivalent du volume du combustible effectivement consommé et qui modifient les proportions des combustibles en fonction des informations sur la viscosité,

— en ce que, ce n'est qu'en sortie de ce réservoir, que dans une canalisation rejoignant le moyen consommant le combustible, la circulation de ce combustible est assurée par une pompe qui, contrairement à celui des deux vannes réunies, a un débit supérieur au volume du combustible consommé et,

— en ce que l'excédent de débit est reconduit au réservoir commun.

L'invention sera bien comprise à l'aide de la description ci-après faite, à titre d'exemple non limitatif, en regard du dessin ci-annexé qui représente, schématiquement:

— figure 1: le dispositif dans une version à commande manuelle,
— figures 2 et 3: le dispositif dans une version à commande automatique.

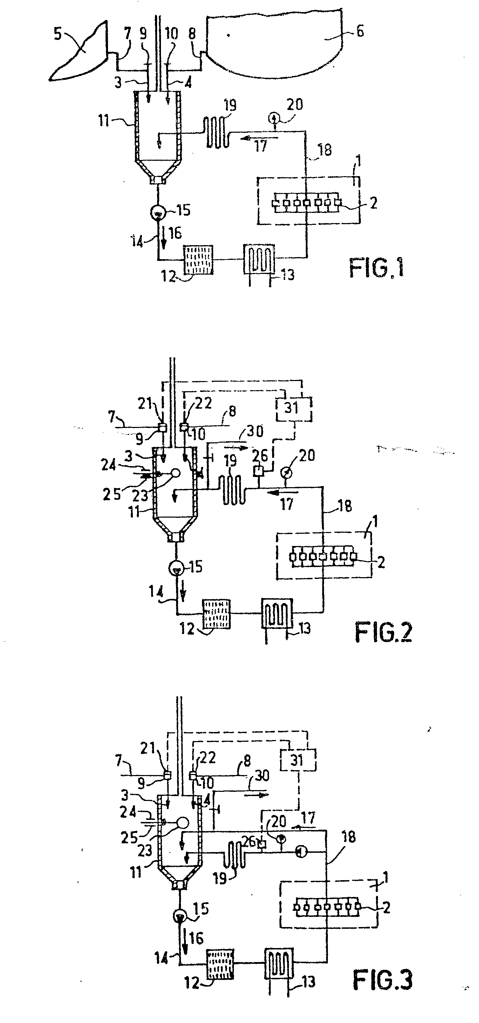

En se reportant figure 1, on remarque un moteur thermique 1 dont les pompes d'un dispositif d'injection 2, sont alimentées à partir d'un réservoir commun 11, lui-même alimenté en combustible léger et/ou lourd prélevé chacun dans leur propre citerne 5, 6 par une des canalisations 7, 8 dans chacune desquelles le débit est contrôlé par une vanne 9, 10 laquelle vanne peut être de tout type connu, tel une vanne à boisseau, à papillon ou à clapet.

Ces vannes ne fournissent ensemble au réservoir que l'équivalent du volume effectivement consommé.

Ce n'est qu'en sortie de ce réservoir 11 que, dans une canalisation 14 rejoignant le dispositif d'injection 2, la circulation du combustible est assuré par une pompe 15 et que, contrairement à celui des deux vannes réunies, le débit 16 de cette pompe 15 est supérieur à la consommation du moteur 1.

L'excédent 17 traverse alors de manière classique, le dispositif d'injection 2, et par une conduite 18, retourne en amont de l'installation. Toutefois, au lieu de retourner à la citerne, l'excédent est ici reconduit au réservoir commun 11.

Avec les conduites 14 et 18, le dispositif d'injection du moteur et le réservoir commun 11, se trouvent donc insérés dans un circuit en boucle dans lequel la circulation de combustible est assurée par la pompe 15.

Le circuit en boucle est également muni d'un dispositif 13 de réchauffage en vue de régler la température du combustible.

Le circuit en boucle porte un moyen d'information sur la viscosité du combustible qui s'y trouve. Le moyen d'information peut être obtenu simplement en insérant dans la conduite de retour 18 un circuit 19 à écoulement laminaire qui engendre une perte de charge proportionnelle à la viscosité du combustible et qui, mesurée par exemple à l'aide d'un manomètre 20 permet de détecter les écarts de viscosité.

Toutefois, le moyen d'information sur la viscosité peut également être placé en dérivation sur la conduite de retour 18 et obtenir l'information sur un prélèvement sur le débit de la conduite.

Bien que l'action de la pompe et du réchauffeur devrait suffire pour assurer une bonne homogénéité, le circuit en boucle peut être muni d'un moyen 12 de mélange additionnel du combustible. Par suite de la consommation du moteur 1, la baisse du niveau de combustible dans le réservoir 11 commande des appoints qui sont équivalents à la dite consommation de combustible.

Ces appoints sont alors faits en combustible léger 3 et/ou lourd 4 selon les écarts de viscosité, et dans l'exemple décrit selon les pertes de charge créées par l'élément viscosimétrique 19. Par une variation de pourcentage des appoints en combustible léger ou en combustible lourd, la viscosité du combustible qui alimente le dispositif d'injection est maintenue constante même si la viscosité des combustibles d'alimentation varie et même si la température du combustible varie. Le dispositif de chauffage ne sert plus alors qu'à régler la température à une valeur déterminée au préalable en fonction du combustible voulu. Les avantages de ce dispositif sont nombreux:

— après démarrage de l'installation au combustible léger, il suffit de mettre en service le réchauffage du combustible de la boucle pour que la viscosité du mélange tende à baisser et que la proportion des appoints en combustible lourd augmente jusqu'à sa valeur optimale en fonction de la température de réglage. Avant l'arrêt du moteur, le retour au fonctionnement au combustible léger est également progressif et à viscosité constante. Le passage d'un combustible à l'autre a donc lieu progressivement, sans choc thermique ni variation de viscosité au niveau du dispositif d'injection,

— dans le cas d'un moteur thermique qui doit fonctionner non pas alernativement avec des combustibles léger et lourd, mais exclusivement avec un combustible intermédiaire, il est possible d'utiliser le dispositif selon l'invention qui, en fonction du réglage de la température, déterminera le pourcentage de combustible lourd et de combustible léger nécessaire pour obtenir le combustible intermédiaire choisi, sans qu'il soit nécessaire de disposer d'un stockage spécial de combustible intermédaire. Le risque de défaut d'homogénéité du combustible intermédiaire se trouve éliminé par le fait même. Cet avantage est particulièrement intéressant pour les installations de groupes électrogènes de bord dans les navires lorsque les moteurs principaux utilisent des combustibles très lourds.

En se reportant aux figures 2 et 3, on remarque que le dispositif peut être vacilement automatisé par exemple au moyen d'électrovannes ou de tout autre dispositif 21, 22 de commande des vannes 9, 10 contrôlant le débit des canalisations 7, 8 sous la commande d'un flotteur de niveau 23 à contacts 24, 25 et/ou d'un manocontact 26.

La figure 3, décrit un exemple de variante de l'invention dans laquelle le moyen d'information sur la viscosité a été disposé en dérivation de la canalisation de retour 18.

Le dispositif peut aussi être muni de moyens de secours permettant le fonctionnement par exemple en cas de panne de courant. L'électrovanne 21 peut être choisie du type normalement ouverte de telle façon qu'en cas de panne de courant le niveau du combustible léger s'élève dans la conduite de dégazage jusqu'à s'équilibrer avec le niveau de la citerne de combustible léger. L'alimentation du moteur est alors assurée en secours par la hauteur manométrique du combustible léger.

Le fonctionnement en secours peut également être assuré à l'aide des circuits de secours alimentés par les pompes de secours.

Le dispositif peut encore comprendre des moyens de sécurité tels qu'en cas d'arrêt d'urgence du moteur, un rinçage du circuit soit assuré par un circuit 30 assurant ainsi le remplacement du combustible lourd présent dans la boucle par du combustible léger qui ficilitera les interventions de réparation et la mise en service ultérieure.

Dans le cas où l'élément viscosimétrique est placé dans la boucle et est traversé par la totalité du débit de la canalisation de retour 18, il est possible de fixer le débit de la pompe de circulation à une valeur telle qu'elle ne soit que faiblement supérieure à la consommation du moteur afin que le débit dans l'élément viscosimétrique soit très influencé par la consommation réelle du moteur, c'est à dire par sa puissance instantanée. Le dispositif devient alors un dispositif à viscosité variable selon la puissance développée par le moteur. L'automatisation du dispositif peut être poussée au moyen d'un appareil d'automaticité 31 au point d'assurer une commande proportionnelle des appoints et d'obtenir ainsi une précision très grande de la viscosité.

Par exemple, les vannes s'ouvrant en tout ou rien, et étant réglées pour obtenir le même débit, on peut faire en sorte qu'à chaque demande d'appoint dans le réservoir commun, les deux vannes s'ouvrent successivement sur au total, un temps fixe correspondant à une certaine dose d'appoint.

Pour régler la proportion des appoints, il suffit alors d'ajuster l'instant de passage d'une vanne à l'autre.

Grâce au réservoir commun et au recyclage se faisant dans ce réservoir commun, l'incidence sur le mélange consommé d'une variation de viscosité se trouve retardée, ce qui donne aiors tout le temps nécessaire pour que la régulation intervienne.

**Revendications**

1. Dispositif d'alimentation d'un moyen consommant du combustible et de régulation de la viscosité de ce combustible, destiné à alimenter un moyen consommant ce combustible, tel plus particulièrement un dispositif d'injection (2) d'un moteur thermique (1), conçu et alimenté de manière à pouvoir fonctionner avec un combustible léger et un combustible lourd contenu dans deux citernes distinctes (5, 6), dans lequel dispositif, un excés de combustible est reconduit en amont de ce dispositif, qui comprend un moyen (19, 20) d'information sur la viscosité du combustible final, agissant sur d'autres moyens aptes à réguler cette viscosité en modifiant les proportions du mélange, ainsi qu'un moyen de réchauffage du combustible et qui est caracterise:

- en ce que le moyen consommant du combustible est alimenté en excés par un réservoir commun (11) lui-même alimenté en combustibles léger et lourd prélevés chacun dans leur propre citerne (5, 6) par une des canalisations (7, 8) dans chacune desquelles le débit n'est contrôlé que par l'une des vannes (9, 10) qui ensemble ne fournissent au réservoir que l'équivalent du volume du combustible effectivement consommé et qui modifient les proportions des combustibles en fonction des informations sur la viscosité,

- en ce que, ce n'est qu'en sortie de ce réservoir (11) que dans une canalisation (14) rejoignant le moyen consommant le combustible, la circulation de ce combustible est assurée par une pompe (15) qui, contrairement à celui des deux vannes (9, 10) réunies, a un débit supérieur au volume de combustible consommé et,

- en ce que l'excédent de débit est reconduit au réservoir commun.

2. Dispositif selon la revendication 1 caractérisé en ce qu'il comprend un appareil de détection (23) du niveau dans le réservoir (11) et commandant des moyens (21, 22) de pilotage des vannes (9, 10) qui contrôlent le débit dans les canalisations (7, 8) de sortie des citernes (5, 6) de telle façon que le débit total corresponde exactement à la quantité consommée.

3. Dispositif selon l'une quelconque des revendications 1 à 2 caractérisé en ce que les vannes, sous le contrôle d'un dispositif d'automatisation (31) sont ouvertes successivement pendant un temps total prédéterminé partagé de manière variable, selon un taux correspondant aux proportions du mélange.

4. Dispositif selon l'une quelconque des revendications 1 à 3 caractérisé en ce que, afin de pouvoir réguler la température en fonction de la consommation, ou s'il s'agit d'un moteur thermique, en fonction de sa charge, le moyen de chauffage est disposé dans le circuit en boucle que forment le réservoir commun, la canalisation (14), le moyen consommant du combustible (1) et la conduite (18) de retour au réservoir commun (11).

5. Dispositif selon l'une quelconque des revendications 1 à 4, caractérisé en ce que la vanne (9, 21) de la canalisation du combustible léger est du type normalement ouverte capable d'assurer une alimentation en secours du moteur avec du combustible léger.

6. Dispositif selon l'une quelconque des revendications 1 à 5 caractérisé en ce qu'il comprend un circuit de rinçage (30) permettant de remplacer en cas d'urgence le combustible lourd présent dans le circuit en boucle par du combustible léger.

**Patentansprüche**

1. Vorrichtung zur Versorgung eines Brennstoffverbrauchers und zur Viskositätsregelung des Brennstoffs, der diesen Brennstoffverbrau-

cher speisen soll, so, wie insbesondere, eine Einspritzvorrichtung (2) für eine Wärmekraftmaschine (1), derart ausgearbeitet und brennstoffgespeist, daß diese mit einem leichten und einem schweren, jeweils in einem getrennten Behälter (5, 6) enthaltenen, Brennstoff funktionieren kann, wobei bei dieser Vorrichtung ein Brennstoffüberschuß bis oberhalb der besagten Vorrichtung zurückgeführt wird, welche eine Informationsvorrichtung (19, 20) über die Viskosität des endgültigen Brennstoffs umfaßt, die auf andere, zur Regelung der Viskosität und zur Änderung des Mischungsverhältnisses geeignete, Vorrichtungen einwirkt, sowie auf eine Brennstoffwärmvorrichtung, und deren Eigenart in folgendem besteht:

— daß der Brennstoffverbraucher in Überschuß von einem gemeinsamen Behälter (11) her, der seinerseits von aus ihren jeweiligen Behältern (5, 6) zufließendem, durch die Leitungen (7, 8) laufendem, leichten und schwerem Brennstoff gefüllt wird, aus gespeist wird, wobei in jeder der Leitungen der Durchfluß nur von einem der beiden Ventilhähne (9, 10) kontrolliert wird, die zusammen dem Behälter nur den Volumenwert des tatsächlich verbrauchten Brennstoffes liefern, und die Brennstoffmischverhältnisse zwischen den beiden Brennstoffen gemäß der Viskositätsinformationen ändern,

— daß erst beim Austritt dieses Behälters (11), in einer zu dem Brennstoffverbraucher führenden Leitung (14), der Umlauf dieses Brennstoffes durch eine Pumpe (15) gewährleistet wird, die entgegengesetzt zu den beiden Ventilhähnen zusammen (9, 10), einen stärkeren Durchfluß aufweist als das Volumen des verbrauchten Brennstoffes, und

— daß dieser Brennstoffüberschuß zum gemeinsamen Behälter zurückgeführt wird.

2. Vorrichtung gemäß Patentanspruch 1, eigengeartet dadurch, daß sie ein Brennstoffstandsdetektionsgerät (23) im Behälter (11) umfaßt, das die Steuerungselemente (21, 22) der Ventilhähne (9, 10) pilotiert, die den Durchfluß in den Leitungen (7, 8) der Austritte der Behälter (5, 6) derart kontrollieren, daß der Gesamtdurchfluß genau der verbrauchten Brennstoffmenge entspricht.

3. Vorrichtung gemäß des einen oder des anderen Patentanspruchs 1 bis 2, eigengeartet dadurch, daß die Ventilhähne, unter Einwirkung einer Automatisierungsvorrichtung (31) nacheinander während einer voreingestellten und auf wechselnde Weise verteilten Gesamtzeit, je nach Brennstoffmischungsverhältnis, geöffnet werden.

4. Vorrichtung gemäß des einen oder des anderen Patentanspruches 1 bis 3, eigengeartet dadurch, daß, um die Temperatur je nach Verbrauch, oder, wenn es sich um eine Wärmekraftmaschine handelt, nach deren Leistung, regeln zu können, die Heizvorrichtung im Leitungskreis, den der gemeinsame Behälter, die Leitung (14), der Brennstoffverbraucher (1) und die Rückführleitung (18) zum gemeinsamen Behälter (11) bilden, angeordnet ist.

5. Vorrichtung gemäß des einen oder des anderen Patentanspruchs 1 bis 4, eigengeartet dadurch, daß der Ventilhahn (9, 21) der Leichtbrennstoffleitung von einem normalerweise offenen Typ ist, und geeignet, dem Motor eine Notversorgung mit Leichtbrennstoff gewähren zu können.

6. Vorrichtung gemäß des einen oder des anderen Patentanspruchs 1 bis 5, eigengeartet dadurch, daß sie einen Spülkreis enthält, (30), der es möglich macht, im Notfalle den im Kreislauf enthaltenen schweren Brennstoff durch leichten Brennstoff zu ersetzen.

## Claims

1. Appliance for supplying a fuel consuming device and for controlling the viscosity of this fuel, intended to supply a device consuming this fuel, and, in particular, an injection device (2) for a heat engine (1), designed and supplied in such a way as to operate on light fuel and heavy fuel contained in 2 separate tanks (5, 6), in which device, surplus fuel is conveyed back upstream of this device, which comprises data resource on the final fuel viscosity, acting on other devices suitable for controlling this viscosity by modifying the blend ratio, as well as a fuel heating device and which can be distinguished:

— by the fact that the fuel consuming device is supplied with surplus fuel from a common tank (11) itself supplied with light and heavy fuel each taken from the relevant tank (5. 6) through one of the pipes (7, 8) in which the flow is regulated solely by one or other of the valves (9, 10) which together only supply the tank with the equivalent of the volume of fuel actually used and which modify the fuel proportions depending on the viscosity data;

— by the fact that it is only at the outlet to this tank (11) that in a pipe (14) which rejoins the fuel consuming device, the circulation of this fuel is ensured by a pump (15) which, contrary to that of the 2 valves (9, 10) together, has a flow rate greater than the volume of fuel used and

— by the fact that the surplus flow is conveyed back to the common tank.

2. Appliance following claim 1 distinguished by the fact that it comprises a detection device (23) for the level in the tank (11) and for controlling the adjustment devices (21, 22) on the valves (9, 10) which determine the flow in the pipes (7, 8) at the outlet to the tanks (5, 6) so that the total flow corresponds exactly to the quantity used.

3. Appliance following either claim 1 or 2 distinguished by the fact that the valves, controlled by an automation device (31), open in turn for a total predetermined length of time, the ratio varying according to the blend proportions.

4. Appliance following any of claims 1 to 3 distinguished by the fact that, in order to regulate the temperature with respect to fuel consumption, or for a heat engine, with respect to load, the heating device is placed in the loop circuit formed by the common tank, the pipe (14), the fuel consuming device, and the return pipe (18) to the common tank (11).

5. Appliance following any of claims 1 to 4 distinguished by the fact that the valve (9, 21) on the light fuel pipe is normally open and capable of ensuring an emergency supply of light fuel to the engine.

6. Appliance following any of claims 1 to 5 destinguished by the fact that it comprises a flushing circuit (30) allowing the heavy fuel present in the loop circuit to be replaced in an emergency by light fuel.

0 034 534

FIG.1

FIG.2

FIG.3

7